# EUROPÄISCHE PATENTSCHRIFT

(11) **EP 1 221 352 B1**
(45) Veröffentlichungstag und Bekanntmachung des Hinweises auf die Patenterteilung: **10.08.2005**
(21) Anmeldenummer: 01120363.5
(22) Anmeldetag: 25.08.2001
(51) Int. Cl.: B23K 37/02, B23K 37/04, B62D 65/00, B23Q 7/00, B65G 47/60, B25J 5/04

(54) **Transporteinrichtung für Kraftfahrzeugkarosserie-Schweissbaugruppen**
Welding element conveying means for automotive bodies
Appareil de convoyage d'éléments pour le soudage de carosseries automobiles

(30) Priorität: 28.12.2000 DE 10065575
(43) Veröffentlichungstag der Anmeldung: 10.07.2002
(73) Patentinhaber: ThyssenKrupp Drauz GmbH, 74076 Heilbronn (DE)
(72) Erfinder: Bünning, Klaus, 09113 Chemnitz (DE); Rohland, Jörg, 09119 Chemnitz (DE)
(74) Vertreter: Adams, Steffen

(56) Entgegenhaltungen:
- EP-A- 0 180 050
- DE-A- 19 920 183
- US-A- 5 337 594
- PATENT ABSTRACTS OF JAPAN vol. 013, no. 299 (M-847), 11. Juli 1989 (1989-07-11) & JP 01 087424 A (HONDA MOTOR CO LTD;OTHERS: 01), 31. März 1989 (1989-03-31)

## Beschreibung

Die Erfindung betrifft Transporteinrichtungen für Kraftfahrzeugkarosserie-Schweißbaugruppen, insbesondere Bodenbaugruppen gemäß dem Oberbegriff des Anspruchs 1 (siehe, z.B., DE-A-199 20 183).

Es sind Transporteinrichtungen für Rohbauschweißvorrichtungen für Kraftfahrzeugkarosserie-Schweißbaugruppen, insbesondere Bodenbaugruppen, mit überkopf-Transportbahnen für den An- und Abtransport der Schweißbaugruppen bekannt (DE-A-199 20 183). Diese bestehen aus zwei zwischen den beiden überkopf-Transportbahnen angeordneten Führungsportalen, die eine Spannvorrichtung einschließen und einen verfahrbaren Ausleger tragen. Beidseitig am Ausleger sind senkrecht verfahrbare Hauptschlitten gelagert, die ihrerseits auf ihnen verfahrbare Greiferschlitten tragen. Die Zahnriemenantriebe für beide Hauptschlitten und ihre Greiferschlitten sind im Ausleger gelagert und ermöglichen eine Verdoppelung der senkrechten Hubgeschwindigkeit. Masseausgleicheinrichtungen entlasten die Zahnriemenantriebe. Durch die Portalbauart ist ein erheblicher Aufwand an Bauteilen erforderlich. Diese Bauart lässt lediglich senkrechte und waagerechte Bewegungen des Auslegers und der Schlitten zu. Somit kann keine optimale Wechselzeit erreicht werden.

Es ist Aufgabe der Erfindung, gattungsgemäße Transporteinrichtungen für Kraftfahrzeugkarosserie-Schweißbaugruppen dahingehend zu verbessern, dass der Baugruppenaufwand und die Wechselzeit der Karosserie-Schweißbaugruppen erheblich reduziert werden. Der Platzbedarf der Transporteinrichtungen und der Abstand der Überkopf-Transportbahnen soll dadurch minimiert werden. Erfindungsgemäß wird die Aufgabe durch die Merkmale des kennzeichnenden Teils des Patentanspruches 1 gelöst. Die Merkmale der Patentansprüche 2 bis 5 sind vorteilhafte Ausgestaltungen der im Anspruch 1 definierten Erfindung.

Durch die diagonale Richtung der Transporteinrichtungen zwischen der überkopf-Transportbahn und der Rohbauspannvorrichtung wird der Abstand auf kürzestem Weg geradlinig überbrückt. Die diagonalen Lagen der Transporteinrichtungen ermöglichen weiterhin Wartepositionen der Schlitten der Transporteinrichtung wenig oberhalb der Arbeitsbereiche der Bearbeitungsroboter. Dadurch werden die Transportwege während der Stillstandszeit der Bearbeitungsroboter auf ein Minimum verkürzt. Durch die Verwendung eines an sich bekannten Hubverdoppelungsgetriebes als Verschiebeantrieb der Schlitten wird eine hohe Transportgeschwindigkeit erzielt. Durch alle diese Merkmale gemeinsam wird die Stillstandszeit der Bearbeitungsroboter unter 9 Sekunden reduziert. Zum Winkelausgleich zwischen Transporteinrichtung und überkopf-Transportbahn sowie Rohbauspannvorrichtung ist ein Schwenkhebel am Doppelhubschlitten gelagert. Das dreigliedrige Umlaufrädergetriebe sorgt auf einfachste Art für die ständige waagerechte Ausrichtung der Spannvorrichtung mit den Bauteilgreifern und somit der zu transportierenden Bodenbaugruppen. Die bahngesteuerten NC-Motoren des Hubverdoppelungsgetriebes und des Schwenkhebels ermöglichen durch entsprechende Programmierung die punktgenaue Ablage der Bodenbaugruppen auf der Rohbauspannvorrichtung oder dem Schlitten der überkopf-Transportbahn.

Die diagonale Anordnung der Transporteinrichtungen ergibt einen minimalen Platzbedarf und einen geringen Abstand der überkopf-Transportbahnen. Werden die Transporteinrichtungen hängend aus der Ebene der überkopf-Transportbahnen angeordnet, so werden die Bewegungsräume der Bearbeitungsroboter erheblich vergrößert und somit die Taktzeit verringert.

In den Zeichnungen ist die Erfindung an einem Ausführungsbeispiel erläutert.

Es zeigen
- Fig.1: eine schematische Darstellung der Transporteinrichtungen,
- Fig.2: eine Transporteinrichtung in Seitenansicht und

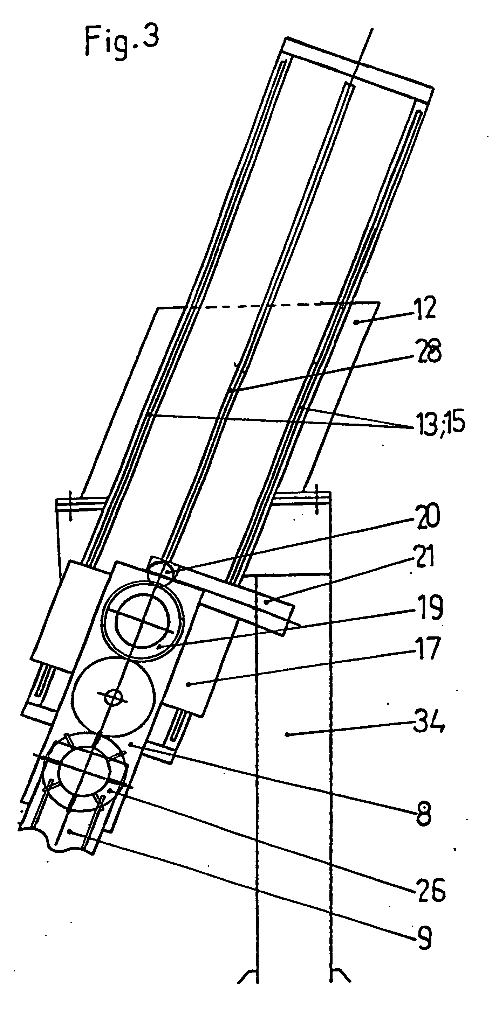

- Fig.3: eine Transporteinrichtung in Vorderansicht.

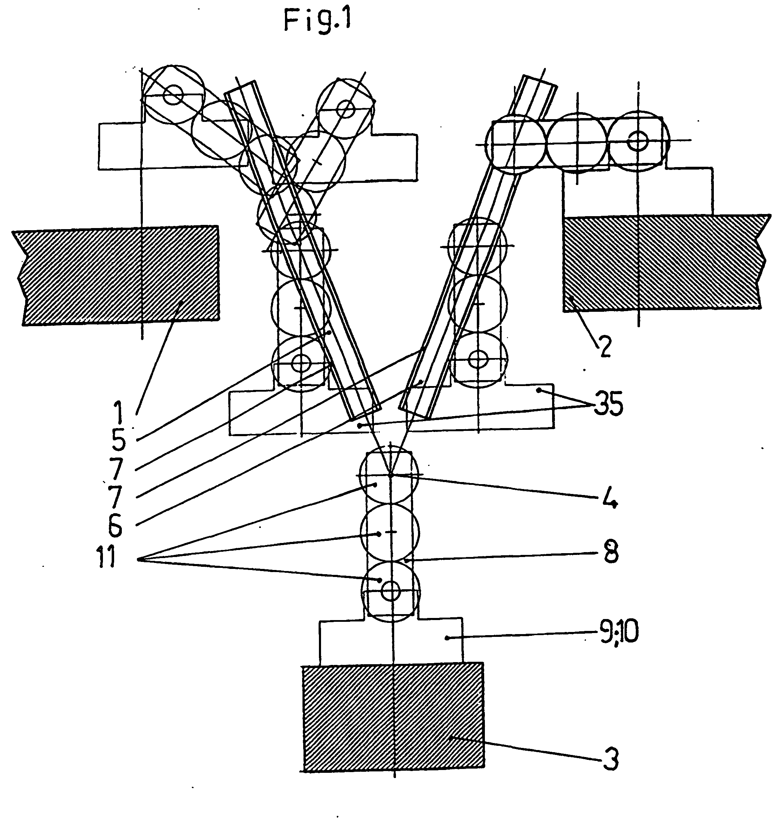

In Fig.1 sind zwei überkopf-Transportbahnen 1;2 mit ihren Wagen und eine Rohbauspanneinrichtung 3 stark schematisiert dargestellt. Diagonal von jeder überkopf-Transportbahn 1;2 verlaufen zu einem Punkt 4 oberhalb der Rohbauspannvorrichtung 3 je eine Transporteinrichtung 5;6. Auf einer Führungsbahn 7 jeder dieser Transporteinrichtungen 5;6 ist ein Schwenkhebel 8 verfahrbar, an dessen freiem Ende eine Spannvorrichtung 9 mit Bauteilgreifern 10 schwenkbar gelagert ist. Ein im Schwenkhebel 8 gelagertes Umlaufrädergetriebe 11 hält die Spannvorrichtung 9 mit Bauteilgreifern 10 ständig in waagerechter Position. Die verschiedenen Lagen der Schwenkhebel 8 am oberen Ende der Führungsbahnen 7 zeigen einige Positionen der Schwenkhebel 8, die bei der Entnahme von einem Wagen einer überkopf-Transportbahn 1 und bei der Ablage auf einen Wagen der anderen überkopf-Transportbahn 2 eingenommen werden.

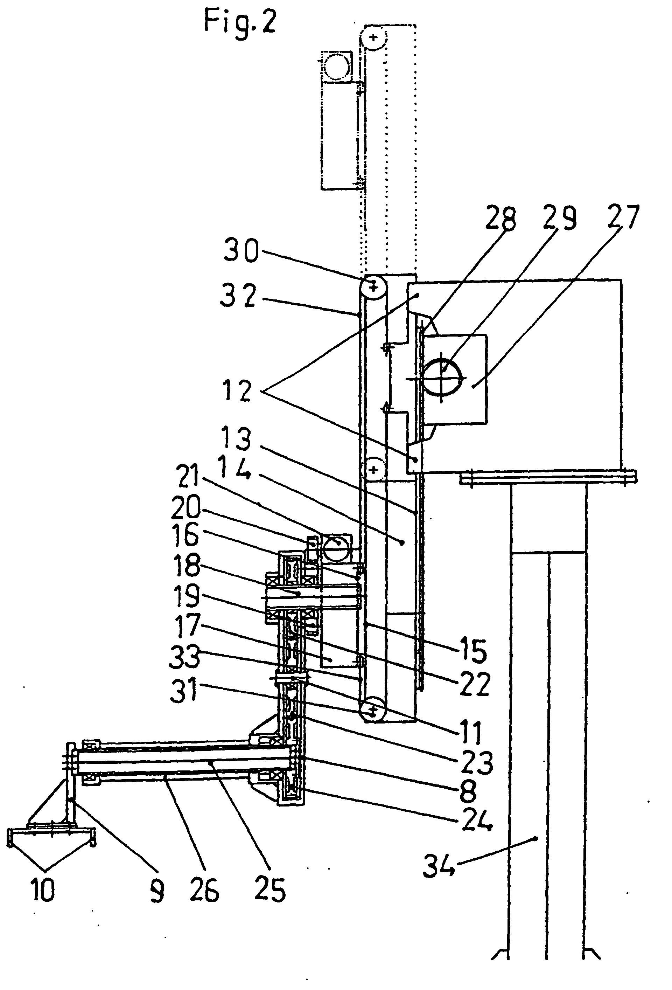

In Fig.2 ist eine der Transporteinrichtungen 5;6 dargestellt. Auf einem Ständer 34 ist eine diagonal zur Rohbauspannvorrichtung 3 gerichtete Führung 12 befestigt. Diese Führung 12 umfasst eine Führungsbahn 13 eines Einfachhubschlittens 14, auf dessen gegenüberliegender Seite eine weitere, sich in Längsachse des Einfachhubschlittens 14 erstreckende Führungsbahn 15 befindet. Diese Führungsbahn 15 wird von einer Führung 16 eines Doppelhubschlittens 17 umfasst. Im Doppelhubschlitten 17 ist eine Achse 18, die senkrecht zur Führung 16 angeordnet ist, befestigt. Auf dem herausragenden Teil der Achse 18 ist der Schwenkhebel 8 drehbar gelagert. Am Schwenkhebel 8 ist koaxial zur Achse 18, zum Doppelhubschlitten 17 zeigend, ein Zahnrad 19 unverdrehbar angebracht. Mit diesem ist ein Ritzel 20 eines bahngesteuerten NC-Motors 21 im Eingriff, der am Doppelhubschlitten 17 befestigt ist. Der Schwenkhebel 8 ist als einarmiger Hebel ausgebildet, dessen Innenraum als Getriebegehäuse für ein dreigliedriges Umlaufrädergetriebe 11 gestaltet ist. Dessen Antriebsrad 22 ist auf der Achse 18 des Doppelhubschlittens 17 unverdrehbar befestigt. Das Zwischenrad 23 ist frei drehbar im Schwenkhebel 8 gelagert. Das Abtriebsrad 24 ist auf einer weit auskragenden Welle 25 drehfest angebracht. Diese Welle 25 ist am freien Ende des Schwenkhebels 8 in diesem und einer Stützhülse 26 verdrehbar gelagert und zeigt in die gleiche Richtung wie die Achse 18 des Doppelhubschlittens 17. Am freien Ende der Welle 25 ist die Spannvorrichtung 9 mit Bauteilgreifern 10 unverdrehbar, jedoch schnell wechselbar befestigt. Die Länge der Auskragung der Welle 25 beträgt mindestens die halbe Bauteillänge.

Der Antrieb des Hubverdoppelungsgetriebes ist als bahngesteuerter NC-Motor 27 im Gehäuse angebracht, das die Führung 12 des Einfachhubschlittens 14 trägt. Zwischen den Führungsbahnen 13 des Einfachhubschlittens 14 ist an diesem eine Zahnstange 28 befestigt, die mit dem Ritzel 29 des NC-Motors 27 in Eingriff ist. Am oberen und unteren Ende des Einfachhubschlittens 14 sind drehbar Zahnriemen-Umlenkscheiben 30;31 gelagert. Die Enden der darübergeführten Zahnriemen 32;33 sind jeweils an einem Ende des Doppelhubschlittens 17 und am Gehäuse der Führung 12 des Einfachhubschlittens 14 befestigt.

An Stelle des dreigliedrigen Umlaufrädergetriebes 11 im Schwenkhebel 8 kann vorteilhaft ein dreigliedriges Zahnriemengetriebe zur Anwendung kommen. Die beiden Zahnriemenscheiben sind jeweils unverdrehbar auf der Achse 18 des Doppelhubschlittens 17 bzw. der weitauskragenden Welle 25 befestigt.

Der Zahnriemen übernimmt die Funktion des Zwischenrades 23. Nicht dargestellt, aber vorhanden sind Spanneinrichtungen für die Zahnriemen 32;33 und eine Masseausgleichvorrichtung für die bewegten Baugruppen und das zu transportierende Bauteil.

An Stelle der Befestigung des Gehäuses der Führung 12 des Einfachhubschlittens 14 auf dem Ständer 34 ist auch eine hängende Anordnung vorteilhaft, wobei die Ebene der Überkopf-Transportbahnen 1;2 als Befestigung dient. Vorstehend ist eine Transporteinrichtung 5 beschrieben. Eine zweite, konstruktiv gleiche Transporteinrichtung 6, ist gegensätzlich diagonal zwischen der anderen Überkopf-Transportbahn 2 und der Rohbauspannvorrichtung 3 angeordnet.

Die Arbeitsweise der Transporteinrichtungen 5;6 ist folgende: Auf einem Schlitten der linken überkopf-Transportbahn 1 wird eine zu bearbeitende Bodenbaugruppe in die übergabeposition transportiert. Zu dieser Zeit befinden sich der Einfachhubschlitten 14 und der Doppelhubschlitten 17 der linken Transporteinrichtung 5 jeweils in ihrer höchsten Stellung.

Dabei ist der Schwenkhebel 8 mittels seines bahngesteuerten NC-Motors 21 so weit nach oben geschwenkt, dass seine Spannvorrichtung 9 mit den Bauteilgreifern 10 über der zu bearbeitenden Bodenbaugruppe positioniert ist. Durch koordinierte Steuerung der NC-Motoren 27;21 des Hubverdoppelungsgetriebes und des Schwenkhebels 8 wird die Spannvorrichtung 9 lagegenau und senkrecht auf die zu bearbeitende Bodenbaugruppe aufgesetzt. Die Bauteilgreifer 10 erfassen die zu bearbeitende Bodenbaugruppe. Durch koordinierte Steuerung beider NC-Motoren 27;21 wird die zu bearbeitende Bodenbaugruppe senkrecht und ohne seitlichen Versatz vom Schlitten abgehoben und dann durch den NC-Motor 21 des Schwenkhebels 8 über den oberen Totpunkt bis zum unteren Totpunkt geschwenkt. Während der Schwenkbewegung werden der Einfachhubschlitten 14 und der Doppelhubschlitten 17 so weit nach unten verfahren, dass die zu bearbeitende Bodengruppe wenig oberhalb der Arbeitsbereiche der Bearbeitungsroboter eine Warteposition 35 erreicht, von der aus ein minimierter Weg bis zur Rohbauspannvorrichtung 3 zurück zu legen ist.

Zu diesem Zeitpunkt befindet sich die Spanneinrichtung 9 mit ihren Bauteilgreifern 10 der rechten Transporteinrichtung 6 ebenfalls in ihrer Warteposition 35 in gleicher Höhe. Nach Beendigung der Bearbeitung der sich auf der Rohbauspannvorrichtung 3 befindlichen Bodenbaugruppe und des Zurückfahrens der Bearbeitungsroboter in die Homeposition fahren die Schlitten 14;17 der rechten Transporteinrichtung 6 mit ihrer Spanneinrichtung 9 und deren Bauteilgreifer 10 den minimierten Weg bis über die Rohbauspannvorrichtung 3, erfassen dort die bearbeitete Bodenbaugruppe und fahren über die Warteposition 35 hinaus bis zu ihrer höchsten Stellung. Auf diesem Weg wird der Schwenkhebel 8 durch seinen bahngesteuerten NC-Motor 21 aus seinem unteren Totpunkt über seinen oberen Totpunkt hinaus über den Schlitten der rechten überkopf-Transportbahn 2 geschwenkt. Dort legt er durch koordinierte Steuerung der beiden bahngesteuerten NC-Motoren 21;27 punktgenau und senkrecht die bearbeitete Bodenbaugruppe ab. Danach wird der Schwenkhebel 8 über den oberen Totpunkt in den unteren Totpunkt geschwenkt und der Schwenkbewegung überlagert in die Warteposition 35 verfahren. Während der Schwenkbewegungen sorgt das dreigliedrige Umlaufrädergetriebe 11 im Schwenkhebel 8 dafür, dass die Bodenbaugruppe bzw. die Spanneinrichtung 9 ständig die waagerechte Lage beibehält.

Nachdem die Schlitten 14;17 der rechten Transporteinrichtung 6 die bearbeitete Bodenbaugruppe bis in die Höhe der Warteposition 35 gehoben haben, fahren die Schlitten 14;17 der linken Transporteinrichtung 5 aus der Warteposition 35 den minimierten Weg bis zu ihrer unteren Position und legen dort durch koordinierte Steuerung ihrer bahngesteuerten NC-Motoren 21;27 die zu bearbeitende Bodenbaugruppe punktgenau und senkrecht auf der Rohbauspannvorrichtung 3 ab. Sofort danach fahren die Schlitten 14;17 der linken Transporteinrichtung 5 in ihre höchste Stellung. Während dieser Bewegung wird der Schwenkhebel 8 aus seinem unteren Totpunkt über seinen oberen Totpunkt hinaus bis über den Schlitten der linken überkopf-Transportbahn 1 geschwenkt, erfasst dort mit seiner Spanneinrichtung 9 die nächste zu bearbeitende Bodenbaugruppe, schwenkt diese in den unteren Totpunkt. Durch seine Schlittenbewegungen wird die zu bearbeitende Bodenbaugruppe in die Warteposition 35 verfahren.

Sobald beide Transporteinrichtungen 5;6 bis zu ihren Wartepositionen 35 gefahren sind, werden die Arbeitsbewegungen der Bearbeitungsroboter begonnen.

Dieser Zyklus wiederholt sich bei jeder zu bearbeitenden Bodenbaugruppe.

Für die Bearbeitung anderer Bauteile sind die Spanneinrichtungen 9 und die Bauteilgreifer 10 schnell wechselbar ausgebildet. Gleichfalls sind die Programme der bahngesteuerten NC-Motoren 21;27 austauschbar.

Bei Längeren Schwenkhebeln 8 ist es vorteilhaft, das dreigliedrige Umlaufrädergetriebe 11 als Zahnriemengetriebe auszubilden, wobei der Zahnriemen die Funktion des Zwischenrades 23 übernimmt und problemlos größere Abstände zwischen Antriebs- und Abtriebsrad überbrücken kann.

### Aufstellung der Bezugszeichen

- 1: überkopf-Transportbahn
- 2: überkopf-Transportbahn
- 3: Rohbauspannvorrichtung
- 4: Punkt
- 5: Transporteinrichtung
- 6: Transporteinrichtung
- 7: Führungsbahn
- 8: Schwenkhebel
- 9: Spannvorrichtung
- 10: Bauteilgreifer
- 11: Umlaufrädergetriebe
- 12: Führung
- 13: Führungsbahn
- 14: Einfachhubschlitten
- 15: Führungsbahn
- 16: Führung
- 17: Doppelhubschlitten
- 18: Achse
- 19: Zahnrad
- 20: Ritzel
- 21: NC-Motor
- 22: Antriebsrad
- 23: Zwischenrad
- 24: Abtriebsrad
- 25: Welle
- 26: Stützhülse
- 27: NC-Motor
- 28: Zahnstange
- 29: Ritzel
- 30: Zahnriemen-Umlenkscheibe
- 31: Zahnriemen-Umlenkscheibe
- 32: Zahnriemen
- 33: Zahnriemen
- 34: Ständer
- 35: Warteposition

## Patentansprüche

1. Transporteinrichtung für Kraftfahrzeugkarosserie-Schweißbaugruppen, insbesondere Bodenbaugruppen, mit zwei Überkopf-Transportbahnen (1,2) und einer Rohbauspannvorrichtung (3), wobei diese Schweißbaugruppen von der ersten Überkopf-Transportbahn (1) zu der Rohbauspannvorrichtung (3) und von dort zu der zweiten Überkopf-Transportbahn (2) transportiert werden, wobei die Transporteinrichtungen mit Führungen, darauf verfahrbaren Schlitten sowie Bauteilgreifern versehen sind, **gekennzeichnet durch** folgende Merkmale:
- zwischen jeder Überkopf-Transportbahn (1;2) und der Rohbauspannvorrichtung (3) ist stationär diagonal gerichtet eine Transporteinrichtung (5;6) angeordnet;
- jede Transporteinrichtung (5;6) besteht aus einer an einem Ständer (34) angebrachten diagonal gerichteten Führung (12), in der die Führungsbahn (13) eines Einfachhubschlittens (14) verschiebbar gelagert ist, der mit einer weiteren parallel verlaufenden Führungsbahn (15) versehen ist, auf der die Führung (16) eines Doppelhubschlittens (17) verschiebbar gelagert ist, wobei der Antrieb (27) des Hubverdoppelungsgetriebes am Ständer (34) gelagert ist;
- an jedem Doppelhubschlitten (17) ist auf einer senkrecht zu dessen Führung (16) angeordneten Achse (18) ein Schwenkhebel (8) gelagert, dessen Schwenkantrieb (21) am Doppelhubschlitten (17) befestigt ist;
- in jedem Schwenkhebel (8) ist ein dreigliedriges Umlaufrädergetriebe (11) gelagert, dessen Antriebsrad (22) verdrehfest auf der Achse (18) am Doppelhubschlitten (17) angeordnet ist und dessen Abtriebsrad (24) am freien Ende des Schwenkhebels (8) gelagert und mit einer weit auskragenden Welle (25) verbunden ist, an deren freiem Ende eine Spannvorrichtung (9) mit Bauteilgreifern (10) befestigt ist.

2. Transporteinrichtung nach Anspruch 1,
**dadurch gekennzeichnet,**
**dass** die Antriebe des Hubverdoppelungsgetriebes und des Schwenkhebels (8) bahngesteuerte NC-Motoren (21;27) sind.

3. Transporteinrichtung nach den Ansprüchen 1 und 2,
**dadurch gekennzeichnet,**
**dass** zwischen dem bahngesteuerten NC-Motor (27) des Hubverdoppelungsgetriebes und dem Einfachhubschlitten (14) ein Ritzel/Zahnstangengetriebe (28;29) und zwischen dem Einfachhubschlitten (14) und dem Doppelhubschlitten (17) ein Zahnriemengetriebe (30;31;32;33) angeordnet ist.

4. Transporteinrichtung nach den Ansprüchen 1 bis 3,
**dadurch gekennzeichnet,**
**dass** die Umlaufrädergetriebe (11) der Schwenkhebel (8) als Zahnriemengetriebe ausgebildet sind, bei denen die Zahnriemen die Funktion der Zwischenräder (23) übernehmen.

5. Transporteinrichtung nach einem der Ansprüche 1 bis 4, **dadurch gekennzeichnet, dass** eine zu bearbeitende Schweißbaugruppe durch einen Schwenkarm (8) vom Schlitten der Überkopf-Transportbahn (1) über den oberen zum unteren Totpunkt schwenkbar und diagonal zu einer Warteposition (35) verfahrbar ist; von dort während der Stillstandzeit der Bearbeitungsroboter auf die Rohbauspannvorrichtung (3) ablegbar ist, wobei unmittelbar zuvor durch die Transporteinrichtung (6) der anderen Überkopf-Transportbahn (2), aus ihrer Warteposition (35) kommend, die bearbeitete Schweißbaugruppe von der Rohbauspannvorrichtung (3) entnehmbar und diagonal und schwenkend zur Überkopf-Transportbahn (2) verfahrbar ist.

## Claims

1. Transporting device for motor vehicle body weld assemblies, in particular base assemblies, having two overhead transport tracks (1, 2) and a bodyshell fastening device (3), wherein these weld assemblies are transported from the first overhead transport track (1) to the bodyshell fastening device (3) and from there to the second overhead transport track (2), wherein the transporting devices are provided with guides, slides which can be conveyed thereon and component grippers,
**characterised by** the following features:
- a transporting device (5; 6) is disposed between each overhead transport track (1; 2) and the bodyshell fastening device (3) in a stationary, diagonally directed manner;
- each transporting device (5; 6) consists of a diagonally directed guide (12) attached on a support (34), the guide track (13) of a single-stroke slide (14) being disposed in a displaceable manner in said guide, said single-stroke slide being provided with a further guide track (15) which extends in parallel and on which the guide (16) of a dual-stroke slide (17) is disposed in a displaceable manner, wherein the drive mechanism (27) of the stroke duplication gearing mechanism is disposed on the support (34);
- a pivot lever (8) is disposed on each dual-stroke slide (17) on an axle (18) disposed perpendicular to the guide (16) of the dual-stroke slide, the pivot drive mechanism (21) of the pivot lever being attached to the dual-stroke slide (17);
- a three-membered planetary gear system (11) is disposed in each pivot lever (8), the driving wheel (22) of the planetary gear system being disposed on the axle (18) on the dual-stroke slide (17) in a non-rotational manner and the driven wheel (24) of the planetary gear system being disposed on the free end of the pivot lever (8) and being connected to a greatly protruding shaft (25), a fastening device (9) having component grippers (10) being attached on the free end of the shaft.

2. Transporting device as claimed in Claim 1, **characterised in that** the drive mechanisms of the stroke duplication gearing mechanism and of the pivot lever (8) are contour-controlled NC motors (21; 27).

3. Transporting device as claimed in Claims 1 and 2, **characterised in that** a rack and pinion gear (28; 29) is disposed between the contour-controlled NC motor (27) of the stroke duplication gearing mechanism and the single-stroke slide (14), and a toothed belt gearing system (30; 31; 32; 33) is disposed between the single-stroke slide (14) and the dual-stroke slide (17).

4. Transporting device as claimed in Claims 1 to 3, **characterised in that** the planetary gears (11) of the pivot levers (8) are formed as toothed belt gears, wherein the toothed belt assumes the function of the intermediate wheels (23).

5. Transporting device as claimed in any one of Claims 1 to 4, **characterised in that** a weld assembly to be machined can be pivoted by a pivot arm (8) of slides of the overhead transport track (1) over the top dead centre to the bottom dead centre and can be conveyed diagonally to a waiting position (35); from there it can be deposited onto the bodyshell fastening device (3) during the downtime of the machining robots, wherein immediately before coming from its waiting position (3 5) by means of the transporting device (6) of the other overhead transport track (2), the machined weld assembly can be removed from the bodyshell fastening device (3) and conveyed to the overhead transport track (2) in a diagonal and pivoting manner.

## Revendications

1. Dispositif de transport pour des modules de carrosserie de véhicule automobile destinés à être soudés, en particulier de modules de plancher, qui présente deux pistes supérieures de transport (1, 2) et un dispositif (3) de serrage des modules bruts, ces modules à souder étant transportés de la première piste supérieure de transport (1) au dispositif (3) de serrage des modules bruts et de là à la deuxième piste supérieure de transport (2), les dispositifs de transport étant munis de guides, de chariots déplaçables sur ceux-ci et de dispositifs de saisie des composants,
**caractérisé par** les caractéristiques suivantes :
- un dispositif de transport (5, 6) orienté en diagonale et stationnaire est agencé entre chaque piste supérieure de transport (1, 2) et le dispositif (3) de serrage des modules bruts,
- chaque dispositif de transport (5, 6) est constitué d'un guide (12) monté sur un pied (34), orienté diagonalement et dans lequel la piste de guidage (13) d'un chariot (14) à course simple est monté à coulissement, et est doté d'une autre piste de guidage (15) parallèle sur laquelle le guide (16) d'un chariot (17) à course double est monté à coulissement, le dispositif d'entraînement (27) du mécanisme de dédoublement de course étant monté sur le pied (34),
- un levier pivotant (8) dont le dispositif d'entraînement en pivotement (21) est fixé sur le chariot (17) à course double, est agencé sur chaque chariot (17) à course double sur un arbre (18) perpendiculaire au guide (16) de ce chariot,
- dans chaque levier pivotant (8) est monté un mécanisme (11) composée de trois roues planétaires dont la roue d'entraînement (22) est agencée sur l'arbre (18) du chariot (17) à course double de façon à résister à la torsion et dont la roue entraînée (24) est montée sur l'extrémité libre du levier pivotant (8) et est reliée à un arbre (25) fortement saillant à l'extrémité libre duquel est fixé un dispositif de serrage (9) qui présente des dispositifs (10) de saisie des composants.

2. Dispositif de transport selon la revendication 1, **caractérisé en ce que** les dispositifs d'entraînement du mécanisme de dédoublement de la course et du levier pivotant (8) sont des moteurs à commande numérique (NC) (21, 27) asservis aux pistes.

3. Dispositif de transport selon les revendications 1 et 2, **caractérisé en ce qu'**une transmission à pignon et crémaillère (28, 29) est agencée entre le moteur NC (27) asservi aux pistes du mécanisme de dédoublement de la course et le chariot (14) à course simple et **en ce qu'**une transmission à courroie crantée (30, 31, 32, 33) est agencée entre le chariot (14) à course simple et le chariot (17) à course double.

4. Dispositif de transport selon les revendications 1 à 3, **caractérisé en ce que** les transmissions (11) à roue planétaire du levier pivotant (8) sont configurées comme transmissions à courroie crantée dans lesquels les courroies crantées assurent la fonction des roues intermédiaires (23).

5. Dispositif de transport selon l'une des revendications 1 à 4, **caractérisé en ce qu'**un module à souder qu'il faut traiter peut être déplacé du point mort haut au point mort bas par pivotement par un bras pivotant (8) du chariot de la piste supérieure de transport (1), peut être déplacé diagonalement jusqu'à une position d'attente (35) et peut être déposé sur le dispositif (3) de serrage des modules bruts pendant la durée d'arrêt du robot de traitement, le module à souder traité qui, sous l'action du dispositif de transport (6) de l'autre piste supérieure de transport (2), a quitté sa position (35) d'attente immédiatement avant, pouvant être retiré du dispositif (3) de serrage de modules bruts et être déplacé diagonalement et par pivotement jusqu'à la piste supérieure de transport (2).
